Europäisches Patentamt

European Patent Office

Office européen des brevets

(11) Publication number: **0 125 930**
**A2**

# EUROPEAN PATENT APPLICATION

(21) Application number: **84303367.1**

(22) Date of filing: **17.05.84**

(51) Int. Cl.³: **G 04 B 47/02**
**G 04 B 37/16, A 44 C 5/00**
**H 01 Q 1/44**

(30) Priority: **17.05.83 GB 8313658**

(43) Date of publication of application:
**21.11.84 Bulletin 84/47**

(84) Designated Contracting States:
**BE DE FR GB IT NL SE**

(71) Applicant: **SINCLAIR RESEARCH LIMITED**
**25 Willis Road**
**Cambridge CB1 2AQ(GB)**

(72) Inventor: **Beesley, Graham Edgar**
**Upcott Cottage Church Lane**
**Sparsholt Winchester Hampshire, SO21 2NJ(GB)**

(72) Inventor: **Aksnes, Dagfinn**
**Test View Cottage Longstock**
**Stockbridge Hampshire, SO20 6DP(GB)**

(74) Representative: **Carpmael, John William Maurice et al,**
**CARPMAELS & RANSFORD 43 Bloomsbury Square**
**London, WC1A 2RA(GB)**

(54) Strap assembly.

(57) A strap assembly for connecting a device such as a wrist-watch/radio to human body or the like, wherein the strap (1,3) incorporates a loop aerial (4) for the watch/radio. One of the parts (1) of the strap is adjustably connected to a clasp assembly in such a manner that regardless of its adjusted position an electrical connection between the conductor (4) in the strap part (1) and the clasp assembly (9,11) is maintained. For this purpose the clasp assembly has a body portion (13) and a locking portion (21) hingedly connected thereto (at 19) and a projection (27) is provided on the locking portion (21) for engagement in a selected one of a plurality of apertures (7) in the strap part (1) so as to make electrical contact with the conductor (4) preferably through the intermediary of an overlying conductive strip (5). A further important feature of the invention is the provision of a compartment (33) in the clasp assembly (9,11) to receive a battery (34) for the watch/radio, there being electrical connection from the battery to a strap part (3) through the aerial conductor (4) and a further conductor (4a) via connectors (37) and (53) located in the clasp half 11 which is itself electrically connected to the clasp half (13).

FIG. 1.

## STRAP ASSEMBLY

This invention relates to a strap assembly for connecting a device such as a receiver, transmitter or sensor to either an article, or more especially, to the human body. While it is envisaged that the invention could be used for connecting test apparatus or the like to a pipeline or some such object, it has been specifically designed for wrist mounted devices, and especially radio receivers or combined watch/radio receivers, although it could equally easily be applicable to a body, or leg mounted device, such as worn by pilots or perhaps divers.

According to the broadest aspect of the present invention, we provide a strap assembly for connecting a device to an article or to a body wherein a loop conductor is incorporated in the strap.

Obviously for a radio receiver or transmitter, an aerial must be provided, and it is well known that an aerial's performance will improve if it is not too small. Aerials mounted in the casing of radios are known, and it is also known to provide wrist mounted watch/radios with a separate housing for a bar aerial or antenna. However, the performance of such aerials is limited. Preferably therefore, the loop conductor incorporates or comprises a loop aerial.

Preferably, the strap assembly includes two strap parts and a clasp or buckle assembly for connecting together the two strap parts, and electrical connection is provided in the clasp or buckle assembly to maintain the loop.

If desired, more than one electrical connection can be provided between the parts of the clasp assembly and it is also envisaged that more than one conductor could be provided in each strap part in which case at least one electrical connection would be required for each conductor.

Preferably, the clasp assembly comprises two clasp halves, each of which is electrically connected to its respective strap part. Preferably, one of the strap parts is adjustably connected to its associated clasp half, and in a preferred arrangement there is a plurality of different predetermined adjusted positions to permit a plurality of predetermined strap lengths.

Preferably, each strap part is formed of a flexible synthetic resinous material with the or each electrical conductor embedded therein. Preferably, one face of one of the strap parts has apertures therein to expose the or each conductor, and the associated clasp half is conductive and has a body portion having a base and upstanding side walls between which the strap part lies, on the base, there being a locking portion pivotally connected to the body portion having at least one projection thereon, the strap part extending between the body portion and a pivot shaft for the locking portion, which, when it is moved to a locking position, overlies the strap part and body portion, with its at least one projection located in one of said apertures and in electrical contact with the or each conductor, said locking portion being movable away from its locking position to permit strap length adjustment.

Preferably, the clasp half has locking means associated with it for connecting it to the other clasp half.

Obviously, any strap mounted electrical or electronic device (such as those described above) needs a source of power, e.g. a battery, and in some cases, it is advantageous to keep the power source spaced from other component parts. In the case of a wrist mounted radio receiver, space is at a premium, and hence, two or more component housings may be required, at least some of which may be pivotally connected together. It is for example, known to provide different housings, for example one for a receiver tuning mechanism, one for a loudspeaker and a third for the watch mechanism, and it may be desirable to have another for the power source. The advantage of this is that the battery can be kept at a distance from the radio receiver and tuning mechanism, thus minimising any interference. However, a fairly bulky miniature battery is required to operate a radio and its loudspeaker, which means that an objectionally large housing would be required. An alternative, which has already been proposed, is to incorporate the power source in a clasp assembly, which often has to be fairly bulky to achieve its mechanical purpose.

Also according to the present invention, we provide an electrical device having a two part strap for connecting the device to an article or a part of a body, the two strap parts being connectable together by means of a clasp assembly which is of a construction such that it can accept a source of power for the device, said assembly incorporating locking means for adjustably securing one of said strap parts to the assembly at least that part of the strap which is adjustably securable to the clasp assembly incorporating an electrical conductor, and means electrically connecting the assembly to the conductor in the strap part regardless of the position of adjustment of the strap part.

Also according to the invention, we provide a strap assembly for an electrical or electronic device, wherein the strap has an electrical conductor contained therein and is in two parts connected together by a clasp assembly, one half of which is carried by one strap part and the other half of which is carried by the other strap part, one of said strap parts having apertures in one surface thereof through which the electrical conductor is accessible, the associated one clasp half comprising a body portion and a locking portion pivotally connected to the body portion and arranged, when in a locked position to overlie said one surface of the said one strap part in which said apertures are provided, said locking portion having at least one projection on its side facing the strap part for engagement in one of said apertures, said clasp assembly being formed of a conductive material or having a conductive surface thereon, and wherein said projection is of sufficient dimensions that when the locking portion is in its locked position, it will form an electrical connection with said conductor, and there being locking means on said clasp half for locking engagement with the other clasp half which is supported on the other strap part.

Preferably, at least two projections are provided on the locking portion for engagement in successive apertures in the strap part to strengthen the mechanical connection.

Preferably, a strip of conductive material, e.g. of thin copper alloy or very thin stainless steel is incorporated in the strap part, which is electrically connected to said conductor, and an upper surface of which is visible through said apertures for engagement by said at least one projection.

The body portion may comprise a flat plate with upstanding side walls, the locking portion being pivotally connected to the side walls or an upstanding portion thereof at one end thereof, and the opposite end thereof incorporating locking means to hold the locking portion in its locked position.

Preferably, the locking means on the clasp half includes a hook on the end of the locking portion remote from its pivot, with which a tail on the other clasp half engages.

Preferably, at its end remote from the tail, the other clasp half incorporates locking means engageable with co-operating locking means on the one clasp half adjacent the pivot. These locking means may be similar to said previously described locking means and/or a deformable locking hook which engages with said pivot.

Preferably, a housing for a power source, e.g. a battery is provided in the other clasp half which is formed of or coated with electrically conductive material, and there is an electrical connection between the conductor in the strap and the said power source housing. It is preferred that one strap part has one conductor therein, which acts as part of a loop aerial, and the other strap part has two conductors therein, one acting as part of the aerial and a conductor of one polarity and the other acting as the conductor of opposite polarity from the power source to an electronic device, e.g. a radio formed integral with or connected to a wrist watch.

Accordingly, it is preferred that the other clasp half makes electrical contact with the one clasp half both through its tail and through its co-operating locking means.

Preferably, the other strap part is pivotally connected to the other clasp half, and its two conductors extend out of the end of the strap, over the roof of the power source housing, and at the end of the housing remote from the pivotal connection of the other strap part, one conductor and the aerial are connected to a negative connector for the power source, through a soldered connector and a peg locating in an aperture in the conductor, and the other conductor is similarly connected to a positive connector for the power source, which connectors are separated from each

- 6 -

0125930

other by insulating material.

Preferably, the negative connector is also connected, i.e. earthed, to the other clasp half by means of a suitable screw holding the connector in contact with a wall of the clasp half.

Obviously, with the above arrangement, the power from the power source will then have to be transmitted through the strap to the component parts of the wrist watch/radio or other electronic device, and care will have to be taken to ensure a good electrical connection from the strap to the component parts, which can be flexed many times, without failure occurring, and yet a strong mechanical connection must also be achieved.

Preferably, therefore, we also provide a special strap and hinge assembly for this purpose. This is the subject of a further patent application which also claims priority from our U.K. application No. 8313658.

The various aspects of the present invention are now described by way of example with reference to the accompanying drawings all showing parts of a strap assembly for a wrist mounted watch/radio, in which:-

Figure 1 is a longitudinal section on the line I-I in Figure 2 through part of a strap assembly and considerably enlarged, showing two strap parts joined together by a clasp assembly having two clasp halves, which are in electrical contact with each other, and in which one clasp half makes electrical contact with a conductor within the strap,

Figure 2 is an inverted plan view, to the same scale as Figure 1, of one clasp half incorporating a housing for a battery (power source);

Figure 3 is a transverse section on the line III-III in Figure 2, on the same scale as Figures 1 and 2;

Figure 4 is a detailed section on the line IV-IV in Figure 2;

Figure 5 is an exploded isometric schematic view also to an enlarged scale showing how two conductors in the strap part of Figure 2 are electrically connected to the clasp half, and

Figure 6 is a perspective, partly broken away view of part of the strap part which is adjustably connected to the clasp assembly of Figure 1.

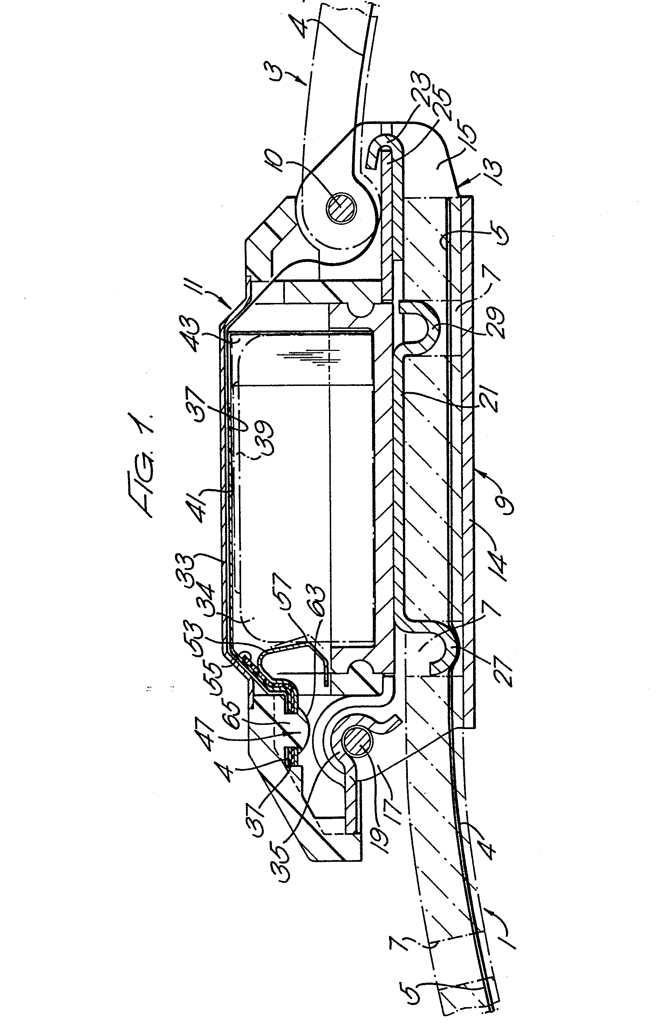

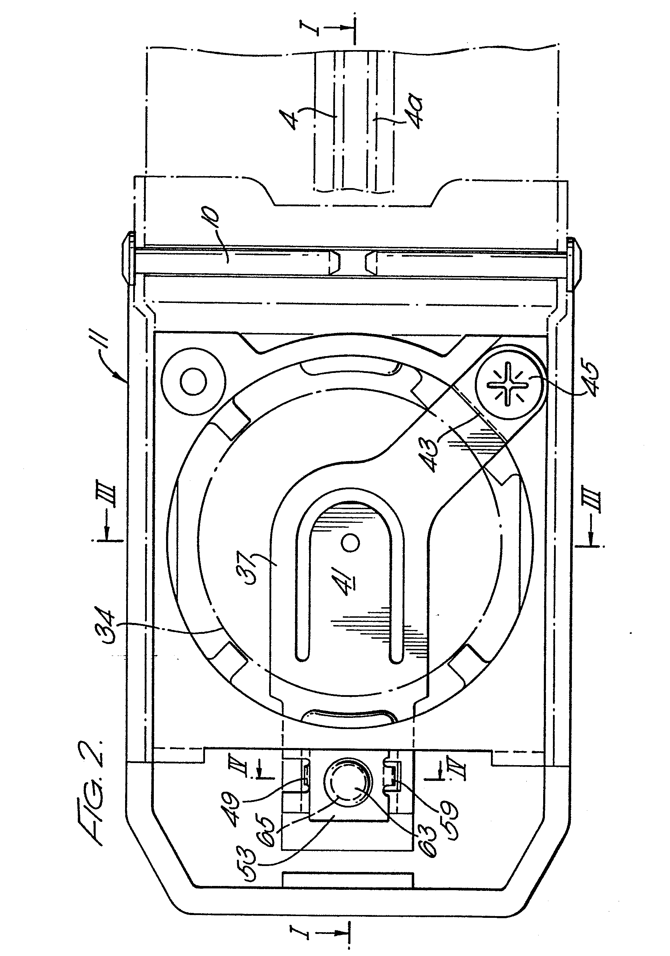

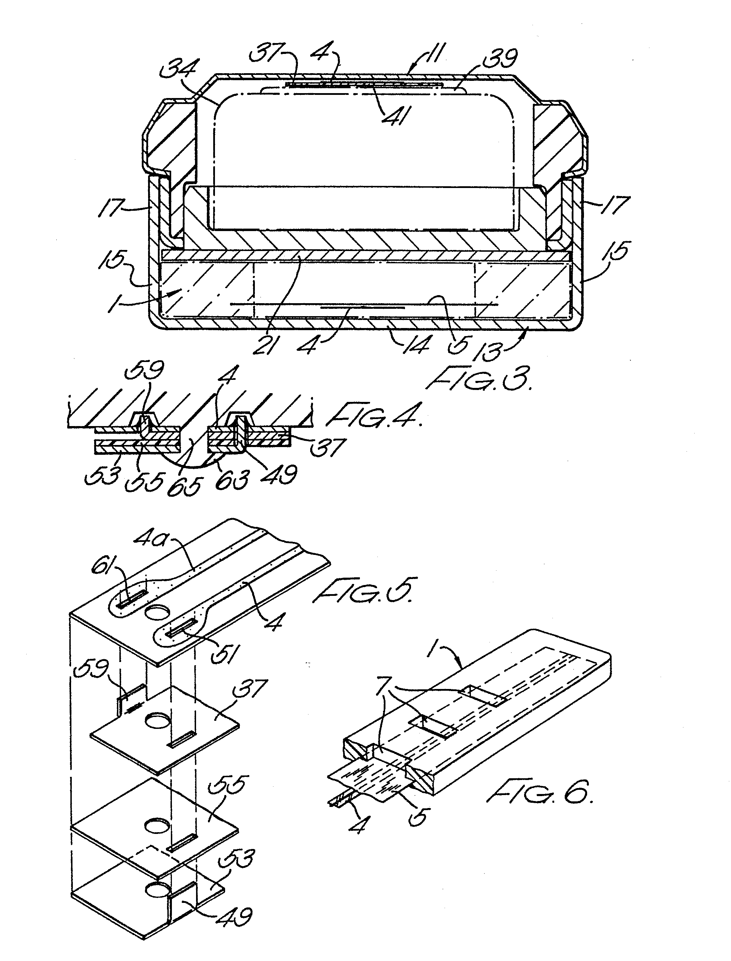

Referring first to Figure 1, one end of a first strap part is shown at 1, and one end of a second strap part is shown at 3. A conductor strip 4 (see also Figures 3-5) which forms part of a loop or ring aerial extends through each strap part, and in the part 1, the conductor is connected to a thin strip of conductive material 5, such as copper alloy which overlies it. At its end, as with a traditional watch strap, the strap part 1 is provided with a plurality of spaced apertures 7, but these apertures do not extend completely through the material of the strap, and instead of being round and about 1 or 2mm diameter, they are rectangular and located centrally of the strap and are about 7-10mm wide. There is a second conductor 4a (not shown in Figure 1) in the strap part 3, as will later be described.

The strap parts are preferably formed of a modified polyurethane material having the trade name QUINN, which has the feel and recovery characteristics of leather, and yet it can be mass produced, and heat sealed, which is particularly useful and enables the conductor(s) 4, 4a and strip 5 to be located therein with ease.

The conductor 4 (or conductor 4,4a) may be in the form of a flexible printed circuit board located in a slot in the strap parts, and held in position by an overlying strip of strap material heat sealed to the remainder of the strap.

The apertured strap part 1 is adjustably or slidably supported in one half 9 of a clasp assembly, the other half 11 of which is pivotally secured to the other strap part 3 at 10. The clasp half 9 comprises a shallow U-shaped body portion 13, having a base plate 14 which U underlies the strap part 1, and two upstanding side walls 15, lying one on either side of strap part 1. At one end, each of the side walls 15 has an upstand 17 projecting therefrom, between which a pivot 19 for a locking portion 21 is supported. The locking portion 21 is located between the side walls 15, and when it has been pivotted from an open position (not shown) to its closed or locking position illustrated, the strap part 1 which passes beneath pivot pin 19, is sandwiched between it and base plate 14 of the body portion 13. At its end remote from pivot 19, the portion 21 has means in the form of a hook 23 with which a tail 25 on the other clasp half 11 engages as will later be described. On its underside, the portion 21 has at least one projection 27, which forms a close fit within, and reaches to the bottom of, each of the apertures 7. Because the clasp assembly is formed of or has a surface coating of a conductive material, this ensures an electrical connection between the material 5, and hence the conductor 4 and clasp half 9. As shown, a further projection 29 is formed on portion 21 to ensure a strong mechanical connection between the strap part 1 and clasp half 9.

Obviously, if it is desired to move the clasp half 9 along the strap part 1 from the position shown, (the clasp half 11 must first be disconnected), then portion 21 is pivoted anticlockwise about pivot 19, thus moving projections 27 and 29 from apertures 7. The half 9 can then be slid along strap part 1, thus effectively shortening or lengthening the strap part 1 and the portion 21 is then pivoted clockwise again and locked in position and electrical connection with strip 5 re-established with portion 21 back in the position shown. The portion 21 is locked in the position shown by means of projections (not shown) provided on side walls 15 moving apart as the edges of portion 21 are forced past them, and then springing back to bear against the top edges of the side walls of portion 21, generally in known manner. Other alternative detent means or latch arrangements are of course possible.

The clasp half 11 is bulky because it incorporates a housing 33 for a battery or other power source 34. In order to connect·clasp half 11, which is formed of the same or similar material to half 9, to the latter, the tail 25 is engaged with hook 23, and the housing 33 is then swung anti-clockwise down to the top of side walls 15 and between upstanding 17, thus tensioning strap part 3, and it is held in this position by a snap fit latching arrangement which may be similar to that for holding portion 21 to body portion 14, or in other known manner. The preferred construction shown comprises a resiliently deformable hook 35 formed at a leading edge of the housing 33 which engages behind (but it could be in front of) the pivot 19. Once so connected, an electrical connection with clasp half 9 is established, both at 23, 25 and at 19, 35, and this means that if the conductor 4 in the strap is an aerial, an aerial loop can be completed through the clasp assembly. The separate conductor 4a (several others in the form of a ribbon could be embedded in the strap parts) is used to carry power from the battery 34 in the housing 33, through strap part 3, (but it could alternatively be via clasp half 9 and strap part 1) to component parts of the watch radio, as will now be further described.

The clasp half 11 is formed partly of stamped metal and partly of a moulded synthetic resinous material, and across the top of the cavity in which the battery 34 is located, a connector or contact 37 for engagement with the negative contact 39 on the battery is provided. This incorporates a spring loaded tongue 41 (see Figure 2), and the connector extends around the housing wall at 43, and is electrically connected to the tail 25 of clasp half 11 by means of a screw "terminal" 45 largely in known manner.

At its end remote from "terminal" screw 45, connector 37 is connected, largely in known manner at location 47 to the conductor 4 (for the loop aerial) by means of a peg 49 passing through an aperture 51 in the conductor 4, and a solder joint (see Figures 4 and 5).

A second positive connector or contact 53 is provided at location 47, spaced from contact 37 by an insulator strip 55, the contact or connector 53 being in the form of a spring which makes contact with casing of battery 34 at 57. This contact 53 is connected to the second conductor 4a in strap part 3, again by means of a peg 59 and aperture 61, and a solder joint, with the end of a flexible printed circuit board supporting conductor 4 and 4a, the connectors 37 and 53 and insulating strip 55 all being connected to the resinous material of the clasp half 11 at location 47 by means of a mushroom shaped head 63 (heat formed) of a peg 63 passing through apertures in connectors 37, 53 and strip 55.

Although the above description has been with reference to a strap assembly for mounting on a person's wrist, e.g. for a wrist watch/radio it will be appreciated that it could be for other body mounted devices, for example, it could be used for a medical testing or monitoring device, or for an automatic monitoring device for an animal. Also, the strap assembly could be used for other purposes, such as
for strapping measuring instruments onto devices, such
as pipelines.

It will of course be understood that the
present invention has been described above purely
by way of example, and modifications of detail can
be made within the scope and spirit of the invention.

0125930

CLAIMS:

1.       A strap assembly for connecting a device (9, 11) to an article or to a body characterised in that a loop conductor (4) is incorporated in the strap (1,3).

2.       A strap assembly according to claim 1 characterised in that the loop conductor (4) incorporates or comprises a loop aerial.

3.       A strap assembly according to claim 1 or 2 which includes two strap parts (1,3) and a clasp or buckle assembly (9,11) for connecting together the two strap parts (1,3), characterised in that an electrical connection is provided in the clasp or buckle assembly (9,11) to maintain the loop (4).

4.       A strap assembly according to claim 3 characterised in that the clasp assembly comprises two clasp halves (9,11), each of which is electrically connected to its respective strap part (1,3).

5.       A strap assembly according to claim 4, characterised in that one of the strap parts (1) is adjustably connected to its associated clasp half (9).

6.       A strap assembly according to claim 5 characterised in that there is a plurality of different predetermined adjusted positions of said strap part (1) to permit a plurality of predetermined strap lengths.

7.       A strap assembly for an electrical device and comprising a two part strap (1,3) for connecting the device to an article or a part of a body, the two strap parts (1,3) being connectable together by means of a clasp assembly (9,11) which is of a construction (33) such that it can accept a source of power (34) for the device, characterised in that said clasp assembly (9,11) incorporates locking means (13,21,27) for adjustably securing one of said strap parts (1) to the clasp assembly (9,11), at least that part of the strap (1) which is adjustably securable to the clasp assembly (9,11) incorporating an electrical conductor (4), and means (27) electrically connecting the assembly (9,11) to the conductor (4) in the strap part (1) regardless of the position of adjustment of the strap part (1).

8. A strap assembly according to claim 5, 6 or 7, characterised in that one face of one of the strap parts (1) has apertures (7) therein to expose the conductor (4) which is embedded in the resinous material of the strap part and an associated clasp half (9) is conductive and has a body portion (13) having a base (14) and upstanding side walls (15) between which the strap part (1) lies, on the base (14), there being a locking portion (21), pivotally connected (at 19) to the body portion (13), having at least one projection (27) thereon, the strap part (1) extending between the body portion (13) and a pivot shaft (19) for the locking portion (21), which, when it (21) is moved to a locking position, overlies the strap part (1) and body portion (13), with its at least one projection (27) located in one of said apertures (7) and in electrical contact with the conductor (4), said locking portion (21) being movable away from its locking position to permit strap length adjustment.

9. A strap assembly for an electrical or electronic device, wherein the strap has an electrical conductor (4) contained therein and is in two parts (1,3) connected together by a clasp assembly (9,11), one half (9) of which is carried by one strap part (1) and the other half (11) of which is carried by the other strap part (3), characterised in that one of said strap parts (1) has apertures (7) in one surface thereof through which the electrical conductor (4) is accessible, the associated one clasp half (9) comprising a body portion (13) and a locking portion (21) pivotally connected (at 19) to the body portion (13) and arranged, when in a locked position, to overlie said one surface of the said one strap part (1) in which said apertures (7) are provided, said locking portion (21) having at least one projection (27) on its side facing the strap part (1) for engagement in one of said apertures (7), said clasp assembly (9,11) being formed of a

-14-

conductive material or having a conductive surface thereon, and wherein said projection (27) is of sufficient dimensions that when the locking portion (21) is in its locked position, it will form an electrical connection with said conductor (4), and there being locking means (19,23) on said clasp half (9) for locking engagement with the other clasp half (11) which is supported on the other strap part (3).

10.        A strap assembly according to claim 8 or 9 characterised in that at least two projections (27,29) are provided on the locking portion (21) for engagement in successive apertures (7) in the strap part (1) to strengthen the mechanical connection.

11.        A strap assembly according to any one of claims 8, 9 or 10 characterised in that a strip (5) of conductive material is incorporated in the strap part (1), which is electrically connected to said conductor (4), and an upper surface of which is visible through said apertures (7) for engagement by said at least one projection (27).

12.        A strap assembly according to any one of claims 8-11 characterised in that the body portion (13) has upstanding side walls (15) and the locking portion (21) is pivotally connected (at 19) to the side walls (15) at one end thereof, and the opposite end thereof incorporates locking means to hold the locking portion (21) in its locked position.

13.        A strap assembly according to claim 12 characterised in that the locking means on the clasp half (9) includes a hook (23) on the end of the locking portion (21) remote from its pivot (19), with which a tail (25) on the other clasp half (11) engages.

14.        A strap assembly according to claim 13 characterised in that at its end remote from the tail (25), the other clasp half (11) incorporates locking means (35) engageable with co-operating locking means on the one clasp half (9) adjacent the pivot (19).

0125930

15. A strap assembly according to any one of claims 8-14, characterised in that a housing (33) for a power source (34) is provided in the other clasp half (11), which is at least partly formed of or coated with electrically conductive material, and in that there is an electrical connection between the conductor (4) in the strap part (3) and the said power source housing (33).

16. A strap assembly according to claim 15 characterised in that the other strap part (3) has two conductors (4,4a) therein, one (4) acting as part of the aerial and a conductor of one polarity and the other (4a) acting as the conductor of opposite polarity from the power source (34) to an electronic device.

17. A strap assembly according to claim 16 characterised in that the other strap part (3) is pivotally connected to the other clasp half (11), and its two conductors (4,4a) extend out of the end of the strap part (3), over the roof of the power source housing (33), and at the end (47) of the housing remote from the pivotal connection (10) of the other strap part (3), one conductor and the aerial (4) are connected to a negative connector (37) for the power source (34), through a soldered connector and a peg (49) locating in an aperture (51) in the conductor (4), and the other conductor (4a) is similarly connected to a positive connector (53) for the power source (34), which connectors (37 and 53) are separated from each other by insulating material (55).

18. A strap assembly according to claim 17 characterised in that the negative connector (37) is also connected to the other clasp half (11) by means of a suitable screw (45) holding the connector (37) in contact with a wall of the clasp half (11).

FIG. 1.

FIG. 2.

0125930

0125930

FIG.3.

FIG.4.

FIG.5.

FIG.6.